# EUROPÄISCHE PATENTSCHRIFT

(11) **EP 3 304 667 B1**
(45) Veröffentlichungstag und Bekanntmachung des Hinweises auf die Patenterteilung: **13.02.2019**
(21) Anmeldenummer: 16725863.1
(22) Anmeldetag: 30.05.2016
(51) Int. Cl.: H02H 7/085, H02P 29/00, H02H 1/00, H02H 3/05

(54) **ÜBERTEMPERATURSCHUTZ**
OVERTEMPERATURE PROTECTION
PROTECTION ANTI-ÉCHAUFFEMENT

(30) Priorität: 01.06.2015 DE 102015108587
(43) Veröffentlichungstag der Anmeldung: 11.04.2018
(73) Patentinhaber: ebm-papst Mulfingen GmbH & Co. KG, 74673 Mulfingen (DE)
(72) Erfinder: BÜRKERT, Martin, 74677 Dörzbach-Hohebach (DE); KAMMLEITER, Steffen, 97959 Assamstadt (DE); HAAS, Günter, 74673 Mulfingen (DE); KÖNIG, Daniel, Gerabronn 74582 (DE)
(74) Vertreter: Staeger & Sperling Partnerschaftsgesellschaft mbB
(86) Internationale Anmeldenummer: PCT/EP2016/062195
(87) Internationale Veröffentlichungsnummer: WO 2016/193228

(56) Entgegenhaltungen:
- WO-A1-2004/045049
- DE-A1- 2 635 552

## Beschreibung

Die Erfindung betrifft eine Schutzschaltung zum Schutz eines Geräts, insbesondere eines Elektromotors, vor einer thermischen Überlastung.

Ein Elektromotor mit einer Vorrichtung zur Temperaturüberwachung gemäß dem technischen Gebiet der Erfindung ist bereits aus der WO 2004/045049 A1 und der DE 26 35 552 A1 bekannt.

Aus dem Stand der Technik ist bekannt, dass zum Schutz vor thermischer Motorüberlastung neben einem Überlastrelais, das anhand der Motorstromaufnahme eine Überlastung des Motors erkennt, z. B. auch Thermistorschutzschaltungen verwendet werden, die die Temperatur einer Motorwicklung detektieren und auswerten. Zur Erfassung der Temperatur der Motorwicklung kommen dabei verschiedene Temperaturdetektorelemente, wie z. B. Temperaturfühler, insbesondere PTC-Thermistoren (PTC: positive temperature coefficient), PTIOO-Fühler und KTY-Fühler (mit PTC-Charakteristik), deren elektrischer Widerstand sich abhängig von der detektierten Temperatur ändert zur Anwendung. Die Funktionsweise des Übertemperaturschutzes aus den im Stand der Technik bekannten Lösungen mit einem PTC-Fühler basiert auf dem Prinzip, dass zwei temperaturabhängige Widerstandsbereiche verwendet werden. Es liegt der Widerstand eines solchen Temperaturdetektorelementes in einem ersten Widerstandsbereich, so lange sich die Motorwicklung in einem Temperaturbereich befindet, der unproblematisch ist. Der zweite Widerstandsbereich, dessen Widerstandswerte beispielsweise größer sind als die des ersten Widerstandsbereichs, entspricht dann einer Temperatur über einem systemspezifischen Schwellenwert.

Weiterhin können als Temperaturdetektorelemente auch so genannte Thermo-Click-Elemente, die auch als Temperaturwächter bezeichnet werden, verwendet werden. Diese stellen in der Regel einfache Schalter dar, die üblicherweise mit Hilfe eines Bimetalls ausgebildet sind, der in dem ersten Temperaturbereich geschlossen ist und sich in einem zweiten Temperaturbereich, d. h. über dem Temperaturschwellwert, öffnet. D. h. der Widerstand wechselt von nahezu 0 Ω zu einem unendlichen Widerstand.

Bei den erstgenannten Temperaturdetektorelementen, den Temperaturfühlern, wird die Überlast des Motors durch die Widerstandsänderung der Temperaturdetektorelemente innerhalb vordefinierter Wertebereiche ausgewertet. Dagegen trennt das Thermo-Click-Element in seinem üblichen Anwendungsgebiet bei Erreichen des Temperaturschwellwerts den Stromkreis durch eine Motorwicklung. Temperaturfühler werden dagegen mittels einer Schutzschaltung ausgewertet, die im Wesentlichen den elektrischen Widerstand der betreffenden Temperaturdetektorelemente bestimmt, und ein Meldungssignal an einen Schalter, an eine Auswerteschaltung oder dergleichen ausgibt, wodurch z. B. ein Abschalten des Gerätes ausgelöst bzw. eine sonstige vorbestimmte Funktion gestartet wird, wenn abhängig von der gemessenen Temperatur eine thermische Überlast erkannt wird. Bei größeren Wicklungsströmen schaltet dabei das Sensorelement oder der Temperaturwächter nicht direkt den Wicklungsstrom, sondern wirkt auf die Stromversorgung oder die Ansteuerung der Leistungsendstufe.

Aus der EP 2535993 A1 ist eine Ansteuerschaltung für einen kollektorlosen, elektronisch kommutierten Gleichstrom-Motor, d. h. für einen so genannten EC-Motor mit einer an einer Versorgungsgleichspannung liegenden Halbleiter-Endstufe bekannt, die von einer elektronischen Kommutierungssteuerung über eine Treiberstufe zum zeitlich versetzten Ansteuern von Statorwicklungen des Motors zwecks Erzeugung eines magnetischen Drehfeldes für einen Rotor in Abhängigkeit von der Rotor-Drehstellung angesteuert wird.

Solche EC-Motoren müssen entsprechend gültiger nationaler und internationaler Normbestimmungen vor Überhitzungen im Falle von abnormalen Betriebssituationen geschützt werden.

Es ist weiterhin bekannt, Motoren impedanzgeschützt auszuführen, d. h. den Wicklungswiderstand und den Drahtdurchmesser so zu dimensionieren, dass keine Überhitzung bei abnormalem Betrieb auftreten kann. Bei EC-Motoren insbesondere mit Einzelzahnwicklungen ist eine Ausführung mit Impedanzschutz aber nicht möglich, weil die Wicklungswiderstände sehr klein sind.

Bisher wurde deshalb in die Kommutierungssteuerung eine Software-Strombegrenzung integriert, die softwaremäßig einen unteren Schwellwert für den Anlaufstrom und einen oberen Schwellwert für den Betriebsstrom vorgibt. Wird in der Anlaufphase der untere Schwellwert erreicht oder überschritten, so wird der Motor abgeschaltet. Wenn der Motor aber korrekt anläuft, wird auf eine Überwachung des Betriebsstroms hinsichtlich des oberen Schwellwertes umgeschaltet, und wenn der obere Schwellwert erreicht oder überschritten wird, wird der Motor abgeschaltet.

Solche, allein durch Software realisierte Schutzmaßnahmen werden allerdings von manchen Zulassungsstellen, wie z. B. UL (Underwriters Laboratories), bei der Zulassungsprüfung betreffend der Konformität mit einem gültigen UL-Standard für die Vergabe der erforderlichen Prüfzeichen nicht berücksichtigt.
Ferner gibt es Probleme, die es in der Praxis aufgrund eines schnellen Temperaturanstieges zu berücksichtigen gibt. So kann es z. B. im Falle einer Rotorblockierung des Motors abhängig von der Wicklungsauslegung zu schnellen Wicklungstemperaturanstiegen kommen. In der Folge treten unzulässig hohe Wicklungstemperaturen auf, die aber auf Grund der trägen Temperaturwächter nicht rechtzeitig die Abschaltung der Wicklungsbestromung bewirkt, da das Ansprechverhalten zu langsam ist.
Der vorliegenden Erfindung liegt demnach die Aufgabe zu Grunde, eine Ansteuerschaltung der eingangs beschriebenen, gattungsgemäßen Art zu schaffen, die eine erhöhte Betriebssicherheit zur Vermeidung von Motor-Überhitzungen gewährleistet und insbesondere Schäden durch einen wie zuvor beschriebene dynamischen, kurzzeitigen überlastfall/ Übertemperaturfall sicher verhindert. Ferner ist es Aufgabe der vorliegenden Erfindung, zuverlässig zu verhindern, dass das Leistungsteil der Leistungselektronik bei einer Rotorblockierung überlastet oder beschädigt wird und insbesondere soll sichergestellt werden, dass die Leistungsschalter der Leistungsendstufe nicht unzulässig (statisch) stark belastet werden. Diese Aufgabe muss vor dem Hintergrund gelöst werden, dass die Motorsteuerung die einschlägigen Normen zur elektrischen Sicherheit/ zum Überlastschutz erfüllt.
Erfindungsgemäß wird daher eine Schutzschaltung zum Schutz vor Überhitzung der Statorwicklungen (U, V, W) eines EC-Motors, die vorzugsweise mit einer Halbleiter-Endstufe verbunden sind, die über eine Treiberschaltung von einer elektronischen Kommutierungssteuerung zum zeitlich versetzten Ansteuern der Statorwicklungen (U, V, W) des EC-Motors zwecks Erzeugung eines magnetischen Drehfeldes ausgebildet sind vorgeschlagen, wobei die Schutzschaltung mit zwei redundanten Sensorkreisen ausgebildet ist, wobei in einem ersten Sensorkreis zwei in Reihe geschaltete widerstands- und wicklungstemperaturabhängige Sensorelemente vorgesehen sind und in einem zweiten Sensorkreis vorzugsweise ein widerstandsabhängiges Sensorelement vorgesehen ist.

Erfindungsgemäß sind der erste und zweite Sensorkreis mit je zwei jeweils voneinander getrennten ersten und zweiten Auswerteschaltungen verbunden, die jeweils bei Erreichen eines systemspezifischen Grenz-Widerstandswertes des jeweilig dem Sensorkreis zugeordneten Sensorelementes eine Unterbrechung der Statorwicklungen (U, V, W) des Motors von der Stromversorgung der Treiberschaltung vorzugsweise über Abschaltmittel bewirken.

Bevorzugt ist es, wenn ferner zwei voneinander entkoppelte Strombegrenzungsschaltungen zur Vermeidung einer zu schnellen Motorerwärmungen vorgesehen sind, die ausgebildet sind, den Strom über einen Shunt-Widerstand zu messen, wobei bei Überschreitung eines systemspezifischen Grenzwertes die Auswerteschaltungen abgeschaltet werden bzw. Abschaltmittel der Auswerteschaltung angesteuert werden, wobei vorzugsweise wenigstens eines der je zwei ersten und zweiten Auswerteschaltungen Abschaltmittel zur Unterbrechung der Statorwicklungen (U, V, W) des Motors von der Treiberstromversorgung der Treiberschaltung aufweisen.

Anders ausgedrückt bedeutet dies, dass der thermische Motorschutz über zwei voneinander getrennte Schaltungskreise (Sensorkreise) sichergestellt wird, wobei der erste Sensorkreis vorzugsweise zwei in Reihenschaltung angeordnete PTCs mit steilem Widerstandsanstieg im Bereich der Abschalttemperatur oder alternativ zwei in Reihe geschaltete Temperaturwächter aufweist. Der zweite Sensorkreis umfasst einen PTC mit annähernd linearer Kennlinie, welcher neben dem Übertemperaturschutz auch geeignet ist, die Temperatur der überwachten Wicklung unmittelbar oder mittelbar zu messen.

Bevorzugt sind alle Bauelemente der beiden Schaltungskreise als normenkonform zugelassene Bauteile ausgebildet.

Die Auswertung des ersten Sensorkreises erfolgt über die zuvor genannten zwei voneinander getrennten und vollständig entkoppelte erste und zweite Auswerteschaltungen. Die Auslösung erfolgt bei einem hardwareseitig festgelegten Grenzwiderstandswert, welcher bei PTC-Einsatz im Bereich des stark ansteigenden Widerstandsverlaufs der Sensorkennlinie liegt und unter Einbeziehung seiner Toleranzen eindeutig einer definierten Temperatur (bzw. einem definierten Temperaturbereich unter Berücksichtigung der Toleranzen) zugeordnet ist. Bei der Verwendung von Temperaturwächtern kann für einen geöffneten Kontakt ebenfalls repräsentativ ein Widerstandswert definiert werden, bei dem die nachgeschaltete Auswerteschaltung anspricht.

Die Auswertung des zweiten PTC-Sensorkreises erfolgt ebenfalls über zwei voneinander getrennte und vollständig entkoppelte erste und zweite Auswerteschaltungen. Auch hier erfolgt die Auslösung bei einem hardwareseitig festgelegten Widerstandswert, welcher über die Sensorkennlinie definiert ist und mit festgelegten Toleranzen eindeutig einer Abschalttemperatur (bzw. einem Temperaturbereich bei Berücksichtigung der Toleranzen) zugeordnet ist.

In einer bevorzugten Ausführungsform der Erfindung ist jeweils der erste der beiden Auswerteschaltungen jedes Sensorkreises mit einem ersten Abschalttransistor verbunden, über den die Kommutierungsabschaltung bewirkt werden kann. Weiter bevorzugt ist es, wenn jeweils der zweite der beiden Auswerteschaltungen jedes Sensorkreises mit einem zweiten Abschalttransistor verbunden ist, über den die Kommutierungsabschaltung bewirkt werden kann.

Beide Sensorkreise (Schaltungskreise) wirken mit ihren Auslöseschaltungen voneinander entkoppelt auf die beiden Abschalttransistoren, welche die Stromversorgung der Treiberschaltung beim Überschreiten der festgelegten max. Temperaturwerte der Wicklung unterbrechen.

In einer Weiterbildung der Erfindung kann weiter vorgesehen sein, dass zur Vermeidung einer zu schnellen Motorerwärmungen (welche ggf. nicht rechtzeitig durch die thermische Motorschutzschaltung erfasst werden können) und zur Verhinderung hoher Motorströme (welche zum Ausfall der Leistungselektronik führen könnten) der Endstufenstrom über einen Shunt-Widerstand gemessen und über zwei voneinander getrennte und vollständig entkoppelte Strombegrenzungsschaltungen ausgewertet wird. Werden die hardwareseitig festgelegten Strom-Grenzwerte überschritten, schalten die Auswerteschaltungen bzw. von den Auswerteschaltungen aktivierbare Abschaltmittel die Kommutierung ab und erst mit großer Totzeit wieder ein. Die Kommutierungsabschaltung erfolgt hierbei bevorzugt über die Unterbrechung der Treiberstromversorgung über die Abschalttransistoren der thermischen Schutzschaltung der Sensorkreise.

Durch die große Totzeit vor dem Wiedereinschalten der Treiberschaltung wird erreicht, dass der mittlere Endstufen- bzw. Motorstrom auf einem unkritischen Niveau bezüglich der Endstufenbelastbarkeit, insbesondere für den Fall eines blockierten Rotors bleibt.

Erfindungsgemäß ist daher die zuvor beschriebene Schutzschaltung so weitergebildet, dass ferner zwei voneinander entkoppelte Strombegrenzungsschaltungen zur Vermeidung einer zu schnellen Motorerwärmungen vorgesehen sind, die ausgebildet sind, den Strom über einen Shunt-Widerstand zu messen, wobei bei Überschreitung eines systemspezifischen Grenzwertes eine Unterbrechung der Statorwicklungen (U, V, W) des Motors von der Treiberstromversorgung der Treiberschaltung erfolgt. In einer bevorzugten Ausgestaltung der Schutzschaltung, ist eine der Strombegrenzungsschaltungen mit der Basis (bzw. dem Gate) des ersten Abschalttransistors verbunden, um diesen unabhängig von den ersten Auswerteschaltungen anzusteuern.

Es ist weiter mit Vorteil vorgesehen, wenn die Strombegrenzungsschaltung entweder mit der Basis (bzw. dem Gate) des zweiten Abschalttransistors verbunden ist, um diesen Abschalttransistor unabhängig von den zweiten Auswerteschaltungen anzusteuern. Alternativ kann die zweite Strombegrenzungsschaltung auch direkt mit der Treiberschaltung verbunden sein, um die Treiberstufe der Treiberschaltung unmittelbar abzuschalten.

In einer ebenfalls bevorzugten Ausbildung der Schutzschaltung können die widerstandsabhängigen Sensorelemente im ersten Sensorkreis als PTC-Widerstände oder Temperaturwächter vorzugsweise mit steiler Widerstandskennlinie vorgesehen und kann das widerstandsabhängige Sensorelement im zweiten Sensorkreis ein PTC-Widerstand mit einer im Wesentlichen linearen Widerstandskennlinie.

In einer Weiterentwicklung der Erfindung kann zur Redundanz vorgesehen sein, dass mittels einer Messschaltung der Zwischenkreisstrom gemessen wird und beim Überschreiten einer festgelegten Schwelle abgeschaltet und erst mit großer Totzeit wieder eingeschaltet wird. Durch die große Totzeit vor dem Wiedereinschalten der Treiberschaltung bzw. der Zwischenkreisstromabschaltung wird erreicht, dass der mittlere Endstufen- bzw. Motorstrom auf einem unkritischen Niveau bezüglich der Endstufenbelastbarkeit (insbesondere bei blockiertem Rotor) bleibt. Diese Ausgestaltung der Schutzschaltung hat den weiteren Vorteil, dass beim zusätzlichen Auftreten eines Fehlers in der Leistungsendstufe (z. B. der Fall des Durchlegierens eines Schalters der Endstufe) der Wicklungsstrom auf Werte unterhalb des zulässigen Motornennstromes begrenzt wird, wodurch eine Überhitzung der Wicklung vermieden wird.

Besonders vorteilhaft ist eine Ausgestaltung, bei der die Messschaltung zur Messung des Zwischenkreisstromes des Zwischenkreises des EC-Motors mit dem Gate eines IGBT-Transistors verbunden ist, um beim Überschreiten eines festgelegten Stromwertes die Steuerstrecke, vorzugsweise die Emitter-Kollektorstrecke des IGBT-Transistors zu sperren.

Ein weiterer Aspekt der vorliegenden Erfindung betrifft ein Verfahren zum Schutz vor Überhitzung der Statorwicklungen (U, V, W) eines EC-Motors (M) unter Verwendung einer wie zuvor beschriebenen Schutzschaltung, wobei bei Erreichen eines systemspezifischen Grenzwertes eines der Sensorelemente der Sensorkreise oder bei Überschreiten eines zulässigen Zwischenkreisstromes eine Unterbrechung der Ströme durch die Statorwicklungen (U, V, W) des Motors (M) erfolgt oder ein Abschaltmittel den Zwischenkreis unmittelbar unterbricht und nach einer ausreichend großen Totzeit ggf. wieder einschaltet.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig.1: eine erste Ausführungsform einer erfindungsgemäßen Schutzschaltung;
- Fig.2: eine zweite Ausführungsform einer erfindungsgemäßen Schutzschaltung und
- Fig.3: eine dritte Ausführungsform einer erfindungsgemäßen Schutzschaltung.

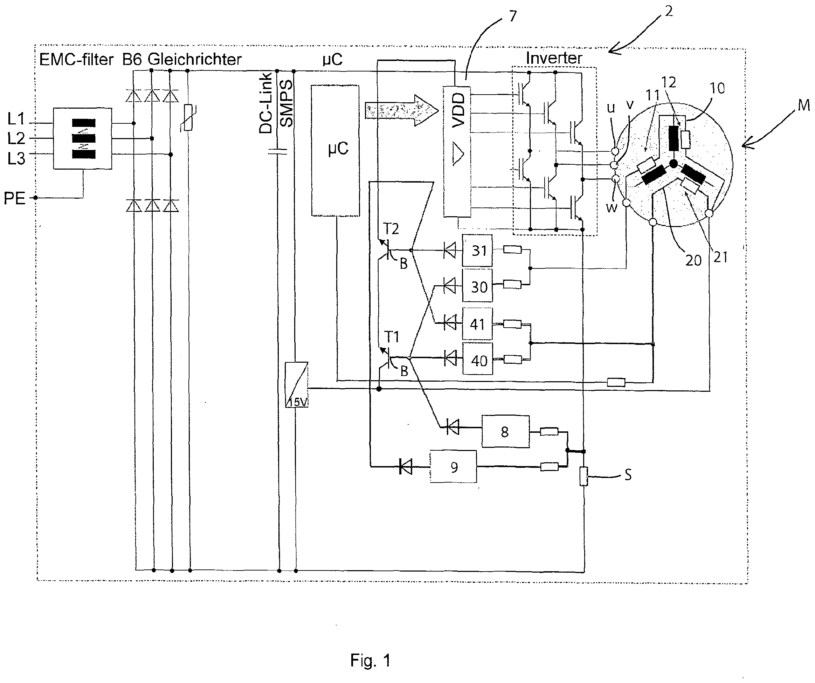

In den Figuren 1 bis 3 sind unterschiedliche Ausführungsformen einer erfindungsgemäßen Schutzschaltung gezeigt, wobei gleiche Bezugszeichen auf gleiche strukturelle oder funktionale Merkmale hinweisen.

In Figur 1 ist eine erste Ausführungsform einer erfindungsgemäßen Schutzschaltung 1 zum Schutz vor Überhitzung der Statorwicklungen U, V, W eines EC-Motors M die mit einer Halbleiter-Endstufe 2 verbunden sind, gezeigt, die über eine Treiberschaltung 7 von einer elektronischen Kommutierungssteuerung zum zeitlich versetzten Ansteuern der Statorwicklungen U, V, W des Motors M zwecks Erzeugung eines magnetischen Drehfeldes ausgebildet sind.

Die Schutzschaltung 1 ist mit zwei redundante Sensorkreisen 10, 20 ausgebildet. Im ersten Sensorkreis 10 sind zwei in Reihe geschaltete widerstandsabhängige Sensorelemente 11,12 und zwar zwei PTC-Widerstände vorgesehen. Im zweiten Sensorkreis 20 ist ebenfalls ein widerstandsabhängiges Sensorelement 21 und zwar ein PTC-Widerstand mit einer im Wesentlichen linearen Widerstands-Kennlinie vorgesehen. Die widerstandsabhängige Sensorelemente 11, 12 im ersten Sensorkreis stellen PTC-Widerstände mit steiler Widerstandskennlinie dar. Die beiden Sensorkreise 10, 20 sind mit je zwei jeweils voneinander getrennten ersten und zweiten Auswerteschaltungen 30, 31 bzw. 40, 41 verbunden, die bei Erreichen eines systemspezifischen Grenz-Widerstandswertes des jeweilig dem Sensorkreis 10 bzw. 20 zugeordneten Sensorelementes 11,12 bzw. 21 eine Unterbrechung der Statorwicklungen U, V, W des Motors M von der Stromversorgung der Treiberschaltung 7 über Abschaltmittel bewirken.

Wie in der Figur 1 zu erkennen ist, sind ferner zwei voneinander entkoppelte Strombegrenzungsschaltungen 8, 9 zur Vermeidung einer zu schnellen Motorerwärmungen vorgesehen, die ausgebildet sind, den Strom über einen Shunt-Widerstand S zu messen, wobei bei Überschreitung eines systemspezifischen Grenzwertes die Abschaltmittel T1 bzw. T2 angesteuert bzw. ausgeschaltet werden.

Wie ferner zu erkennen ist, ist die Strombegrenzungsschaltung 8 mit der Basis B (bzw. dem Gate) des ersten Abschalttransistors T1 verbunden, um den ersten Abschalttransistor T1 unabhängig von der Temperaturauswertung der PTC-Widerstände der ersten Auswerteschaltungen anzusteuern.

Ferner ist in diesem Ausführungsbeispiel vorgesehen, dass die Strombegrenzungsschaltungen 9 mit der Basis B bzw. dem Gate des zweiten Abschalttransistors T2 verbunden ist, um den zweiten Abschalttransistor T2 unabhängig von der Temperaturauswertung des PTC-Widerstandes 21 durch die zweiten Auswerteschaltungen 31, 41 anzusteuern.

Die ersten und zweiten Auswerteschaltungen 30, 31, 40, 41 sind jeweils mit ersten und zweiten Abschaltmittel T1, T2 zur Unterbrechung der Statorwicklungen U, V, W des Motors M von der Treiberstromversorgung der Treiberschaltung 7 verbunden, und zwar die beiden ersten Auswerteschaltungen 30, 40 mit dem ersten Abschalttransistor T1, über den die Kommutierungsabschaltung bewirkt werden kann und die zweiten Auswerteschaltungen 31, 41 mit einem zweiten Abschalttransistor T2, über den die Kommutierungsabschaltung bewirkt werden kann.

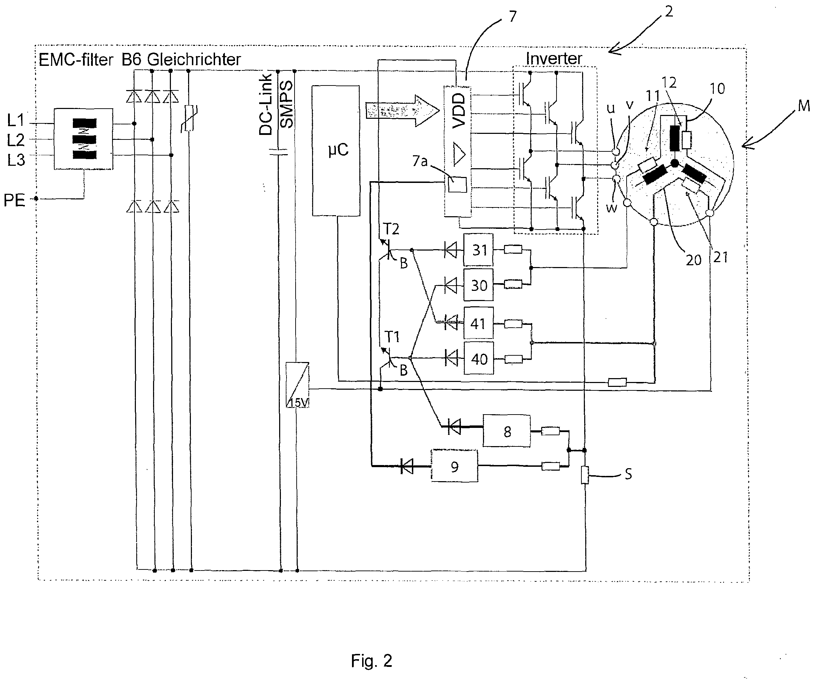

In der Figur 2 ist eine zweite Ausführungsform einer erfindungsgemäßen Schutzschaltung 1 gezeigt, die sich von der ersten Ausführungsform dadurch unterscheidet, dass die Strombegrenzungsschaltungen 9 nicht mit der Basis B bzw. dem Gate des zweiten Abschalttransistors T2 verbunden ist, sondern direkt mit der Treiberschaltung 7, um die Treiberstufe 7a unmittelbar abzuschalten.

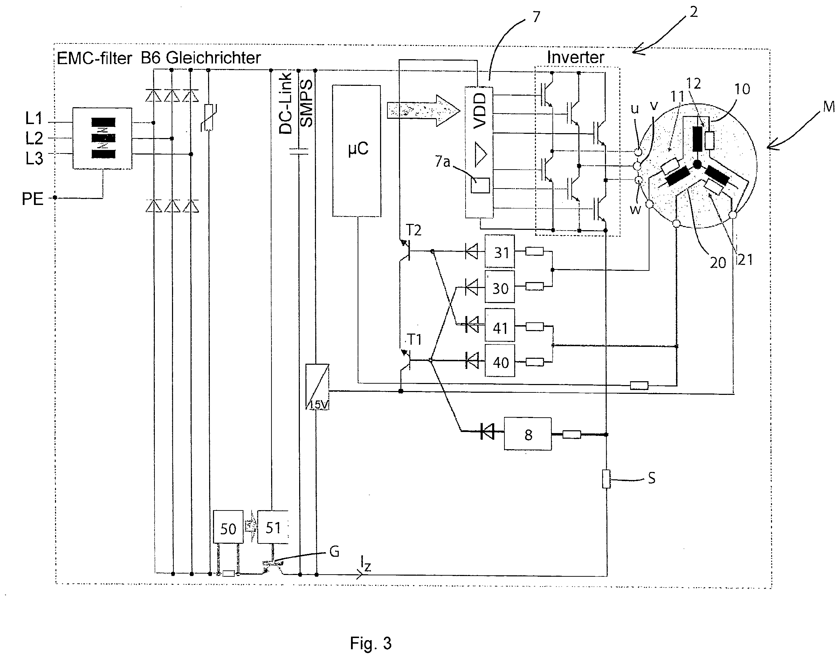

Die Figur 3 zeigt eine dritte Ausführungsform einer erfindungsgemäßen Schutzschaltung. Diese Schutzschaltung 1 weist keine zweite Strombegrenzungsschaltungen 9 auf, sondern eine Messschaltung 50 zur Messung des Zwischenkreisstromes Iz des Zwischenkreises des EC-Motors M auf. Die Schutzschaltung 50 mit dem Gate G eines IGBT-Transisitors 51 verbunden, um bei Überschreiten eines festgelegten Stromwertes die Emitter-Kollektorstrecke des IGBT-Transistors 50 zu sperren. Diese Ausführungsform hat den zusätzlichen Vorteil, dass beim Auftreten eines Fehlers in der Leistungsendstufe der Wicklungsstrom auf Werte unterhalb des zulässigen Motornennstromes begrenzt wird, wodurch eine Überhitzung der Wicklung vermieden wird.

Wie in den Figuren 1 bis 3 zu erkennen ist, sind die Sensorkreise mit den ersten und zweiten Auswerteschaltungen 30, 31, 40, 41 und die Strombegrenzungskreise mit den Strombegrenzungsschaltungen 8, 9 über Dioden stromrichtungsseitig gerichtet.

Die Erfindung beschränkt sich in ihrer Ausführung nicht auf die vorstehend angegebenen bevorzugten Ausführungsbeispiele- Vielmehr ist eine Anzahl von Varianten denkbar, welche von der dargestellten Lösung auch bei grundsätzlich anders gearteten Ausführungen Gebrauch macht.

## Patentansprüche

1. Schutzschaltung (1) zum Schutz vor Überhitzung der Statorwicklungen (U, V, W) eines EC-Motors (M) die mit einer Halbleiter-Endstufe (2) verbunden sind, die über eine Treiberschaltung (7) von einer elektronischen Kommutierungssteuerung zum zeitlich versetzten Ansteuern der Statorwicklungen (U, V, W) des Motors (M) zwecks Erzeugung eines magnetischen Drehfeldes ausgebildet sind, **dadurch gekennzeichnet, dass** die Schutzschaltung (1) mit zwei redundante Sensorkreisen (10, 20) ausgebildet ist, wobei im ersten Sensorkreis (10) zwei in Reihe geschaltete widerstands- und wicklungstemperaturabhängige Sensorelemente (11, 12) und im zweiten Sensorkreis (20) ein widerstands- und wicklungstemperaturabhängiges Sensorelement (21) vorgesehen sind, wobei der erste und zweite Sensorkreis (10) mit je zwei jeweils voneinander getrennten ersten und zweiten Auswerteschaltungen (30, 31 bzw. 40, 41) verbunden sind, die bei Erreichen eines systemspezifischen Grenz-Widerstandswertes des jeweilig dem Sensorkreis zugeordneten Sensorelementes (11, 12 bzw. 21) eine Unterbrechung der Treiberschaltung (7) bewirken, um dadurch die Statorwicklungen (U, V, W) des Motors (M) stromlos zu schalten.

2. Schutzschaltung (1) nach Anspruch 1, **dadurch gekennzeichnet, dass** ferner zwei voneinander entkoppelte Strombegrenzungsschaltungen (8, 9) zur Vermeidung einer zu schnellen Motorerwärmungen vorgesehen sind, die ausgebildet sind, den Strom über einen Shunt-Widerstand zu messen, wobei bei Überschreitung eines systemspezifischen Grenzwertes über Abschaltmittel die Stromversorgung der Treiberschaltung unterbrochen wird, um dadurch die Statorwicklungen (U, V, W) des Motors (M) stromlos zu schalten.

3. Schutzschaltung (1) nach Anspruch 2, **dadurch gekennzeichnet, dass** wenigstens eines der je zwei ersten und zweiten Auswerteschaltungen (30, 31, 40, 41) Abschaltmittel zur Unterbrechung der Treiberstromversorgung der Treiberschaltung (7), um dadurch die Statorwicklungen (U, V, W) des Motors (M) stromlos zu schalten.

4. Schutzschaltung (1) nach einem der Ansprüche 1 bis 3, **dadurch gekennzeichnet, dass** die beiden ersten Auswerteschaltungen (30, 40) mit einem ersten Abschalttransistor (T1) verbunden sind, über den die Kommutierungsabschaltung bewirkt werden kann oder wird.

5. Schutzschaltung (1) nach einem der Ansprüche 1 bis 4, **dadurch gekennzeichnet, dass** die zweiten Auswerteschaltungen (31, 41) mit einem zweiten Abschalttransistor (T2) verbunden sind, über den die Kommutierungsabschaltung bewirkt werden kann oder wird.

6. Schutzschaltung (1) nach Anspruch 5, **dadurch gekennzeichnet, dass** die Strombegrenzungsschaltung (8) mit der Basis (B) des ersten Abschalttransistors (T1) verbunden ist, um den ersten Abschalttransistor (T1) unabhängig von den ersten Auswerteschaltungen (30, 40) anzusteuern.

7. Schutzschaltung (1) nach Anspruch 5 oder 6, **dadurch gekennzeichnet, dass** die Strombegrenzungsschaltung (9) entweder mit der Basis (B) des zweiten Abschalttransistors (T2) verbunden ist, um den zweiten Abschalttransistor (T2) unabhängig von den zweiten Auswerteschaltungen (31, 41) anzusteuern oder direkt mit der Treiberschaltung (7), um die Treiberstufe (7a) unmittelbar abzuschalten.

8. Schutzschaltung (1) nach einem der vorhergehenden Ansprüche 1 bis 7, **dadurch gekennzeichnet, dass** die widerstandsabhängigen Sensorelemente (11, 12) im ersten Sensorkreis (10) PTC-Widerstände oder Temperaturwächter vorzugsweise mit steiler Widerstandskennlinie sind.

9. Schutzschaltung (1) nach einem der vorhergehenden Ansprüche 1 bis 8, **dadurch gekennzeichnet, dass** das widerstandsabhängige Sensorelement (21) im zweiten Sensorkreis (20) ein PTC-Widerstand mit einer im Wesentlichen linearen Widerstandskennlinie ist.

10. Schutzschaltung (1) nach einem der vorhergehenden Ansprüche 1 bis 9, **dadurch gekennzeichnet, dass** eine Messschaltung (50) zur Messung des Zwischenkreisstromes (Iz) eines Zwischenkreises des EC-Motors vorgesehen wird, die vorzugsweise mit dem Gate (G) eines IGBT-Transisitors (51) verbunden ist, um beim bei Überschreiten eines festgelegten Stromwertes die Steuerstrecke, vorzugsweise die Emitter-Kollektorstrecke des IGBT-Transistors (51) zu sperren.

11. Verfahren zum Schutz vor Überhitzung der Statorwicklungen (U, V, W) eines EC-Motors (M) unter Verwendung einer Schutzschaltung gemäß einem der Ansprüche 1 bis 10, wobei bei Erreichen eines systemspezifischen Grenzwertes eines der Sensorelemente (11, 12 bzw. 21) eine Unterbrechung der Stromversorgung der Statorwicklungen (U, V, W) des Motors (M) erfolgt oder ein Abschaltmittel den Zwischenkreis unterbricht bzw. abschaltet.

## Claims

1. A protection circuit (1) for protecting against overheating of the stator windings (U, V, W) of an EC motor (M) which are connected with a semiconducting output stage (2), which are configured with a driver circuit (7) from an electronic commutation controller for temporally offset triggering of the stator windings (U, V, W) of the motor (M) for the purpose of the generation of a magnetic rotating field, **characterized in that** the protection circuit (1) is configured with two redundant sensor circuits (10, 20), wherein two resistance- and winding temperature-dependent sensor elements (11, 12) connected in series in the first sensor circuit (10) and one resistance- and winding temperature-dependent sensor element (21) in the second sensor circuit (20) are provided, wherein the first and second sensor circuits (10) are each connected with two first and second evaluation circuits (30, 31 or 40, 41, respectively), each separated from one another, which effect an interruption of the driver circuit (7) when reaching a system-specific threshold resistance value of the respective sensor element (11, 12 or 21, respectively) associated with the sensor circuit to thereby switch off the current to the stator windings (U, V, W) of the motor (M).

2. The protection circuit (1) according to claim 1, **characterized in that** further two current limiting circuits (8, 9) decoupled from one another for avoiding an excessively rapid motor warming are provided which are configured to measure the current via a shunt resistance, wherein the current supply to the driver circuit is interrupted via shutdown means when exceeding a system-specific threshold to thereby switch off the current to the stator windings (U, V, W) of the motor (M).

3. The protection circuit (1) according to claim 2, **characterized in that** at least one of the two respective first and second evaluation circuits (30, 31, 40, 41) has shutdown means for interrupting the driver current supply to the driver circuit (7) to thereby switch off the current to the stator windings (U, V, W) of the motor (M).

4. The protection circuit (1) according to any of claims 1 to 3, **characterized in that** the two first evaluation circuits (30, 40) are connected with a first shutdown transistor (T1) through which the commutation shutdown may be or is effected.

5. The protection circuit (1) according to any of claims 1 to 4, **characterized in that** the second evaluation circuits (31, 41) are connected with a second shutdown transistor (T2) through which the commutation shutdown may be or is effected.

6. The protection circuit (1) according to claim 5, **characterized in that** the current limiting circuit (8) is connected with the base (B) of the first shutdown transistor (T1) to trigger the first shutdown transistor (T1) independently from the first evaluation circuits (30, 40).

7. The protection circuit (1) according to claim 5 or 6, **characterized in that** the current limiting circuit (9) is either connected with the base (B) of the second shutdown transistor (T2) to trigger the second shutdown transistor (T2) independently from the second evaluation circuits (31, 41) or directly with the driver circuit (7) to shut down the driver stage (7a) directly.

8. The protection circuit (1) according to any of claims 1 to 7, **characterized in that** the resistance-dependent sensor elements (11, 12) in the first sensor circuit (10) are PTC resistances or temperature controllers, preferably with a steep resistance characteristic.

9. The protection circuit (1) according to any of claims 1 to 8, **characterized in that** the resistance-dependent sensor element (21) in the second sensor circuit (20) is a PTC resistance with an essentially linear resistance characteristic.

10. The protection circuit (1) according to any of claims 1 to 9, **characterized in that** a measurement circuit (50) for measuring the intermediate circuit current (Iz) of an intermediate circuit of the EC motor is provided, which is preferably connected with the gate (G) of an IGBT transistor (51) to block the control path, preferably the emitter collector path of the IGBT transistor (51), when exceeding a predetermined current value.

11. A method for protecting against overheating of the stator windings (U, V, W) of an EC motor (M) using a protection circuit according to any of claims 1 to 10, wherein the current supply to the stator windings (U, V, W) of the motor (M) is interrupted or a shutdown means interrupts or shuts down the intermediate circuit when reaching a system-specific threshold of one of the sensor elements (11, 12 or 21, respectively).

## Revendications

1. Circuit de protection (1) pour la protection contre une surchauffe des enroulements de stator (U, V, W) d'un moteur EC (M) qui sont reliés à un étage final à semi-conducteurs (2), qui sont réalisés pour la commande à décalage temporel des enroulements de stator (U, V, W) du moteur (M) à des fins de génération d'un champ magnétique tournant par une commande de commutation électronique par le biais d'un circuit pilote (7), **caractérisé en ce que** le circuit de protection (1) est réalisé avec deux circuits de capteur redondants (10, 20), dans lequel deux éléments de capteur (11, 12) dépendants de la résistance et de la température d'enroulement montés en série sont prévus dans le premier circuit de capteur (10) et un élément de capteur (21) dépendant de la résistance et de la température d'enroulement est prévu dans le deuxième circuit de capteur (20), dans lequel le premier et deuxième circuit de capteur (10) sont reliés à respectivement deux premiers et deuxièmes circuits d'évaluation (30, 31 ou 40, 41) séparés respectivement l'un de l'autre, qui provoquent lors de l'atteinte d'une valeur de résistance limite spécifique au système de l'élément de capteur (11, 12 ou 21) associé respectivement au circuit de capteur, une coupure du circuit pilote (7) pour mettre ainsi les enroulements de stator (U, V, W) du moteur (M) hors courant.

2. Circuit de protection (1) selon la revendication 1, **caractérisé en ce que** deux circuits de limitation de courant (8, 9) découplés l'un de l'autre sont prévus en outre pour éviter un échauffement trop rapide du moteur, qui sont réalisés pour mesurer le courant par le biais d'une résistance de shuntage, dans lequel lors du dépassement d'une valeur limite spécifique au système l'alimentation en courant du circuit pilote est coupée par le biais de moyens de coupure pour mettre ainsi les enroulements de stator (U, V, W) du moteur (M) hors courant.

3. Circuit de protection (1) selon la revendication 2, **caractérisé en ce qu'**au moins un des respectivement deux premiers et deuxièmes circuits d'évaluation (30, 31, 40, 41) des moyens de coupure pour la coupure de l'alimentation en courant pilote du circuit pilote (7) pour mettre ainsi les enroulements de stator (U, V, W) du moteur (M) hors courant.

4. Circuit de protection (1) selon l'une quelconque des revendications 1 à 3, **caractérisé en ce que** les deux premiers circuits d'évaluation (30, 40) sont reliés à un premier transistor de coupure (T1), par le biais duquel la coupure de commutation peut être ou est provoquée.

5. Circuit de protection (1) selon l'une quelconque des revendications 1 à 4, **caractérisé en ce que** les deuxièmes circuits d'évaluation (31, 41) sont reliés à un deuxième transistor de coupure (T2), par le biais duquel la coupure de commutation peut être ou est provoquée.

6. Circuit de protection (1) selon la revendication 5, **caractérisé en ce que** le circuit de limitation de courant (8) est relié à la base (B) du premier transistor de coupure (T1) pour commander le premier transistor de coupure (T1) indépendamment des premiers circuits d'évaluation (30, 40).

7. Circuit de protection (1) selon la revendication 5 ou 6, **caractérisé en ce que** le circuit de limitation de courant (9) est relié soit à la base (B) du deuxième transistor de coupure (T2) pour commander le deuxième transistor de coupure (T2) indépendamment des deuxièmes circuits d'évaluation (31, 41) soit directement au circuit pilote (7) pour couper directement l'étage pilote (7a).

8. Circuit de protection (1) selon l'une quelconque des revendications précédentes 1 à 7, **caractérisé en ce que** les éléments de capteur dépendants de la résistance (11, 12) dans le premier circuit de capteur (10) sont des résistances PTC ou des contrôleurs de température de préférence avec une courbe caractéristique de résistance pentue,

9. Circuit de protection (1) selon l'une quelconque des revendications précédentes 1 à 8, **caractérisé en ce que** l'élément de capteur dépendant de la résistance (21) dans le deuxième circuit de capteur (20) est une résistance PTC avec une courbe caractéristique de résistance sensiblement linéaire.

10. Circuit de protection (1) selon l'une quelconque des revendications précédentes 1 à 9, **caractérisé en ce qu'**un circuit de mesure (50) est prévu pour la mesure du courant de circuit intermédiaire (Iz) d'un circuit intermédiaire du moteur EC qui est relié de préférence à la grille (G) d'un transistor IGBT (51) pour bloquer lors du dépassement d'une valeur de courant définie le trajet de commande, de préférence le trajet émetteur-collecteur du transistor IGBT (51).

11. Procédé pour la protection contre une surchauffe des enroulements de stator (U, V, W) d'un moteur EC (M) en utilisant un circuit de protection selon l'une quelconque des revendications 1 à 10, dans lequel lors de l'atteinte d'une valeur limite spécifique au système d'un des éléments de capteur (11, 12 ou 21), une coupure de l'alimentation en courant des enroulements de stator (U, V, W) du moteur (M) a lieu ou un moyen de coupure coupe ou arrête le circuit intermédiaire.
